# EUROPEAN PATENT SPECIFICATION

(11) **EP 4 044 404 B1**
(45) Date of publication and mention of the grant of the patent: **06.05.2026**
(21) Application number: 21821636.4
(22) Date of filing: 24.03.2021
(51) Int. Cl.: H02K 3/24, H02K 1/20, H02K 9/19

(54) **A CONCENTRATED WINDING AXIAL COOLING MOTOR STATOR AND MOTOR**
STATOR UND MOTOR MIT KONZENTRIERTER WICKLUNG UND AXIALER KÜHLUNG
STATOR ET MOTEUR À REFROIDISSEMENT AXIAL AVEC ENROULEMENT CONCENTRÉ

(30) Priority: 09.06.2020 CN 202010518076
(43) Date of publication of application: 17.08.2022
(73) Proprietor: BorgWarner PowerDrive Systems(Tianjin) Co., Ltd., Tianjin 300308 (CN)
(72) Inventor: LIU, Yanhai, Tianjin 300308 (CN); CHEN, Xuwen, Tianjin 300308 (CN); LI, Guangju, Tianjin 300308 (CN); ZHANG, Dongliang, Tianjin 300308 (CN)
(74) Representative: HGF
(86) International application number: PCT/CN2021/082826
(87) International publication number: WO 2021/248977

(56) References cited:
- EP-A2- 2 159 906
- WO-A1-2020/049831
- WO-A1-2020/105467
- CN-A- 109 391 087
- CN-A- 109 391 088
- CN-A- 111 555 503
- CN-U- 204 947 750
- CN-U- 204 947 750
- CN-U- 210 327 287
- JP-A- 2007 336 646
- US-B2- 10 666 096
- US-B2- 8 188 625
- US-B2- 9 515 530

## Description

The present invention is a national stage application of International Patent Application No. PCT/CN2021/082826, which is filed on March 24, 2021 and claims the priority of a Chinese patent application No. 202010518076.9 filed with the China National Intellectual Property Administration (CNIPA) on June 9, 2020, entitled "a concentrated winding axial cooling motor stator and a motor".

### Technical Field

The present invention belongs to the technical field of motors, in particular relates to a concentrated winding axial cooling motor stator and a motor.

### Background

In recent years, as new energy vehicles boom, major automobile and parts manufacturers have been devoted to search and development of new energy vehicles and supporting facilities thereof that can meet market requirements. As one of the core parts, a motor has been integrated with a gearbox or a controller into a whole. With a rising requirement on power density, no matter the motor serves as a part of an integrity or works alone, its heat dissipation problem becomes important. Therefore, the requirement on a cooling mode is higher.

However, in a working process of the motor, its main heating component refers to motor stator coils, a rotating magnetic field is generated when an AC/BC passes through the coils, and interacts with a magnetic field of a rotor to generate an electromagnetic torque, so that the motor rotates. A current when passing through stator coils, has energy loss under the effect of a resistance, and the lost energy is mainly transformed into heat. Therefore, how to well control temperature rise of the stator coils becomes very important. At present, oil cooled motors of the same kind mainly depend on oil cooling at an end part of a stator and a middle part of a stator core and oil shredding of the rotor towards end parts of two sides of the stator to achieve heat dissipation. These similar solutions are more suitable for distributed winding stators, which however have limitations to heat dissipation of concentrated winding stators with shorter end parts, dispersive end part structures and larger pores.

An oil cooling structure for a motor is disclosed in D1 (WO2020/105467A1).

### Summary

The invention is defined by the appended claims.

In view of the above problems, the present invention provides a concentrated winding axial cooling motor stator and a motor so as to resolve the above-mentioned or other previous problems in a prior art.

To resolve the above technical problems, the present invention adopts the following technical solution: a concentrated winding axial cooling motor stator is arranged on a casing, includes a stator core and stator windings arranged on the stator core, and further includes barriers and an axial oil feeding device, wherein,
the barriers are arranged on the stator core, are in contact with the stator windings and plug notches of the stator core;
the axial oil feeding device is arranged on any end part of the stator cores or is connected with the casing, and a location of the axial oil feeding device corresponds to any end of the stator cores;
and a side of the axial oil feeding device close to the stator windings is provided with a spray hole, an axis of the spray hole and an axis of each stator winding are slantly intersected, so that an outflow line of a cooling medium is in a slant state and extends from the spray hole towards an end of the axis of the each stator winding, and the cooling medium is sprayed to the barrier and/or the stator winding and thus flows along an axial inner surface of the stator winding towards two ends of the stator winding.

In some embodiments, each barrier and coils of two adjacent groups of the stator windings in slots of the stator core constitute a cooling medium communication cavity, the spray hole corresponds to the cooling medium communication cavity, the barrier blocks off a cooling medium flowing out of the spray hole and guides a flow line of the cooling medium, so that the cooling medium flows along the axial inner surface of the stator winding in the two adjacent groups of the stator windings towards two ends of the stator winding.

In some embodiments, an axis of the spray hole extends slantly from the spray hole towards an end away from the stator winding and provided with the axial oil feeding device.

In some embodiments, a plurality of spray holes are provided, and each cooling medium communication cavity corresponds to a location of at least one of the spray holes;
or, the plurality of spray holes are configured in such a way that adjacent spray holes are spaced apart by one cooling medium communication cavity;
or, the plurality of spray holes are configured in such a way that a portion of the spray holes correspond to a portion of the cooling medium communication cavities, and adjacent spray holes of the other portion of the spray holes are spaced apart by one cooling medium communication cavity so that each coil of each stator winding is sprayed by the cooling medium.

In some embodiments, the axial oil feeding device further includes:
an oil pipe body having a cavity provided therein, and the spray hole being communicated with the cavity inside the oil pipe body for facilitating flowing of the cooling medium;
an oil inlet connected with the oil pipe body and communicated with the cavity inside the oil pipe body so that the cooling medium is able to conveniently enter the inside of the oil pipe body.

In some embodiments, a cross section of the oil pipe body is in a shape of a circle or a polygon.

In some embodiments, the oil pipe body is of an annular structure, or a plurality of oil pipe bodies are provided, and the plurality of oil pipe bodies are annularly arranged by taking the axis of the stator winding as a center.

In some embodiments, the barrier has a flow guide portion, and the flow guide portion is opposite to the corresponding spray hole for changing a flow direction of the cooling medium.

In some embodiments, the barrier is a slot wedge, a frame or insulating paper.

A concentrated winding motor includes a concentrated winding axial cooling motor stator as mentioned above.

By adopting the above technical solution, the concentrated winding axial cooling motor stator is simple in structure and convenient to use. The concentrated winding axial cooling motor stator has an axial oil feeding device that is arranged on a leading-out terminal or a non-leading-out terminal of a motor stator, spraying of a cooling medium is carried out on an end of the motor stator, an axis of a spray hole of an axial cooling structure and an axis of a stator winding are intersected obliquely, so that a cooling medium outflow line is slant and a cooling medium is sprayed towards the other end of the motor stator onto the barrier and blocked off by the barrier. The barrier has a flow guide portion for shunting the cooling medium and changing a flow direction of the cooling medium, so that the cooling medium is divided into two portions and sprayed to an axial inner surface of coils of the concentrated winding stator, flows along the axial inner surface of the coils towards two ends of the stator winding and flows out from the two ends, thereby increasing a heat exchange contact area between the cooling medium and the winding, improving heat dissipation capability, solving the problem that the middle part of the coils of the concentrated winding is quick to temperature rise and a temperature difference between two end parts is large as the cooling medium flows through the whole axial inner surface of the coils, and promoting power density.

The inclination angles of axes of the spray holes are different, so amounts of the cooling medium flowing to two ends are different. Due to different oil outflow angles, allocation of amounts of the cooling medium axially flowing to two end parts is adjusted, so that the axial oil feeding device is able to cool different types of stator windings, and thus has a wide application range.

The axial oil feeding device has an oil pipe body with a cavity provided therein, and one side of the oil pipe body facing the stator winding is provided with a plurality of spray holes. The oil pipe body encircles the circumferential side of the stator winding and is mounted in a yoke space at any end of the motor stator, therefore, the yoke of the stator is fully used, and as the yoke and the stator are secured on a casing, space utilization rate is improved; or the axial oil feeding device is mounted on the casing or integrated on the casing, the axial oil feeding device corresponds to the location of the yoke of the stator when the motor stator is mounted, an interior space of the casing is fully used, and space utilization rate of the casing is improved.

With gearbox lubricating oil as a cooling medium, the lubricating oil flows out of a gearbox into the axial oil feeding device to cool the motor stator, therefore, the gearbox body is simple in oil line design, small in required space, and easy to realize.

### Brief Description of the Drawings

Fig.1 is a schematically structural diagram of an axial oil feeding device of an embodiment of the present invention;
Fig.2 is another schematically structural diagram of the axial oil feeding device of an embodiment of the present invention;
Fig.3 is a schematically structural diagram of the axial oil feeding device of an embodiment of the present invention mounted on a leading-out terminal of a stator;
Fig.4 is a schematically structural diagram of the axial oil feeding device of an embodiment of the present invention mounted on a non-leading-out terminal of the stator;
Fig.5 is a schematically structural diagram of the axial oil feeding device of an embodiment of the present invention mounted on a casing, with its mounting position matched with an end part of the stator;
Fig.6 is a schematically structural diagram of the stator provided with the axial oil feeding device of an embodiment of the present invention;
Fig.7 is an axial flow schematic diagram of a cooling medium when the axial oil feeding device of an embodiment of the present invention is arranged on a leading-out terminal of coils of a stator winding;
Fig.8 is an axial flow schematic diagram of the cooling medium when the axial oil feeding device of an embodiment of the present invention is arranged on a non-leading-out terminal of the coils of the stator winding;
Fig.9 is an axial flow schematic diagram of the cooling medium when the axial oil feeding device of an embodiment of the present invention is arranged on the casing and corresponds to the non-leading-out terminal of the coils of the stator winding;
Fig.10 is another axial flow schematic diagram of the cooling medium when the axial oil feeding device of an embodiment of the present invention is arranged on the casing and corresponds to the non-leading-out terminal of the coils of the stator winding;
Fig.11 is an axial flow schematic diagram of the cooling medium when the axial oil feeding device of an embodiment of the present invention is arranged on the casing and corresponds to the leading-out terminal of coils of the stator winding;
Fig.12 is another axial flow schematic diagram of the cooling medium when the axial oil feeding device of an embodiment of the present invention is arranged on the casing and corresponds to the leading-out terminal of the coils of the stator winding;
Fig.13 is a schematic diagram of the cooling medium of an embodiment of the present invention flowing at an end part;
Fig.14 is a schematically structural diagram of a slot wedge of an embodiment of the present invention;
Fig.15 is a schematically structural diagram of an end part of the slot wedge of an embodiment of the present invention;
Fig.16 is a schematically structural diagram of a frame of an embodiment of the present invention;
Fig.17 is a schematically structural diagram of a corresponding relationship between a spray hole and a cooling medium communication cavity of an embodiment of the present invention;
Fig.18 is another schematically structural diagram of a corresponding relationship between the spray hole and the cooling medium communication cavity of an embodiment of the present invention;
Fig.19 is an imitated diagram of a solution in which axial gap spraying is carried out for cooling adopted by the present invention;
Fig.20 is an imitated diagram of a solution in which an end part of a stator and a middle part of a core are radially sprayed for cooling in a prior art.

In the drawings, the reference signs represent:
1 axial oil feeding device; 2 stator winding; 3 slot wedge;
4 stator core; 5 set bolt; 6 leading-out terminal;
7 non-leading-out terminal; 100 oil pipe body; 101 oil inlet;
102 spray hole; 103 connecting portion; 104 cooling medium outflow line;
300 flow guide portion; L height of the slot wedge; W width of the slot wedge;
8 frame; 800 frame flow guide portion.

### Detailed Description of the Embodiments

The present invention will be further explained in the following embodiments by referring to the appended drawings.

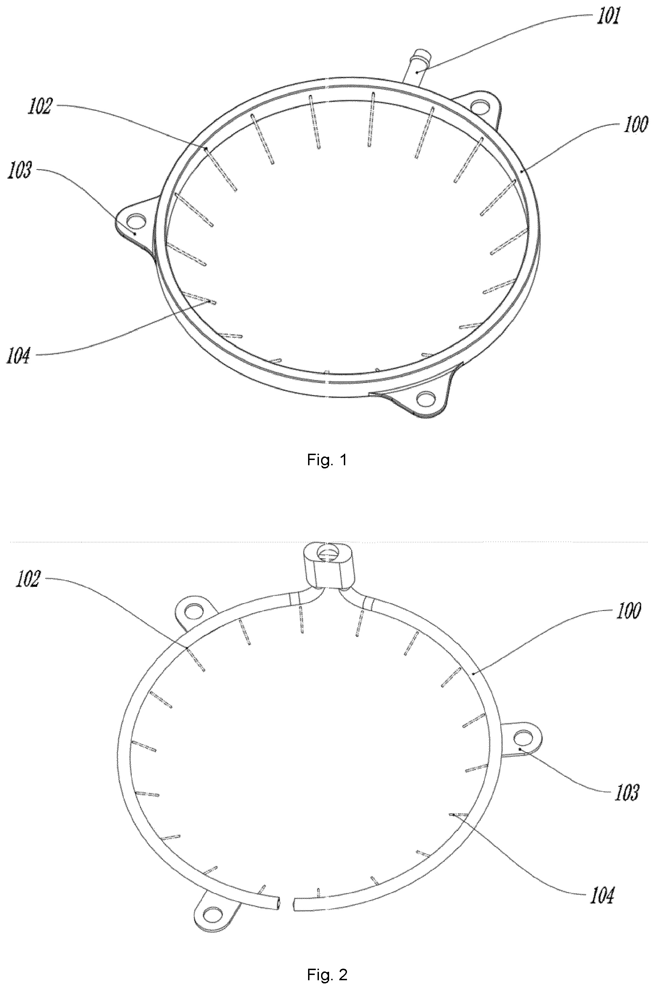

Fig.1 shows a structure of an embodiment of the present invention, particularly shows the structure and a connection relationship of the present embodiment. The present embodiment relates to a concentrated winding axial cooling motor stator and a motor for new energy vehicles. By arrangement of an axial oil feeding device, axial cooling of the concentrated winding axial cooling motor stator is carried out, a cooling medium is directly sprayed on an axial inner surface of coils of the concentrated winding stator, flows along the inner surface of the coils of the stator towards two ends of the stator winding and flows out from the two ends, thereby increasing a heat exchange contact area between the cooling medium and the winding, improving heat dissipation capability, solving a problem that a middle part of the coils of the concentrated winding is quick to temperature rise and a temperature difference between two end parts is large, and promoting power density; meanwhile, the axial oil feeding device is arranged on a yoke at any end of a stator core or mounted on a casing, and is in position fit with a leading-out terminal or non-leading-out terminal of the stator winding, thereby improving a space utilization rate of a hybrid box body and a single motor casing.

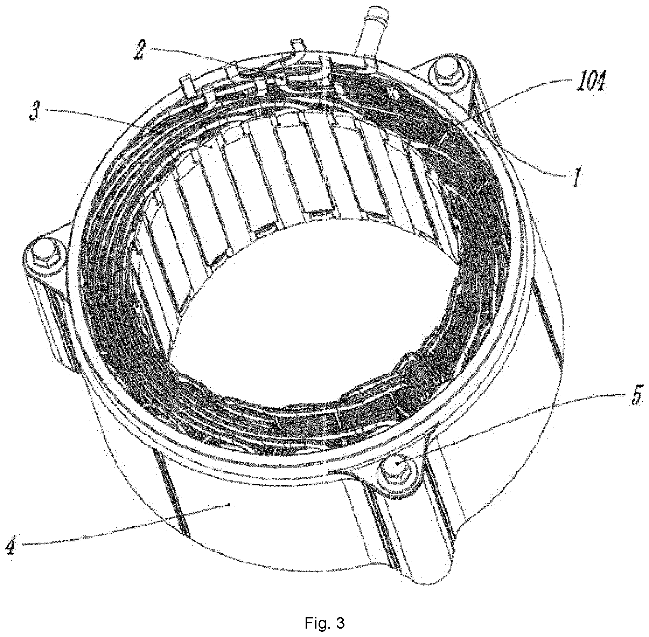

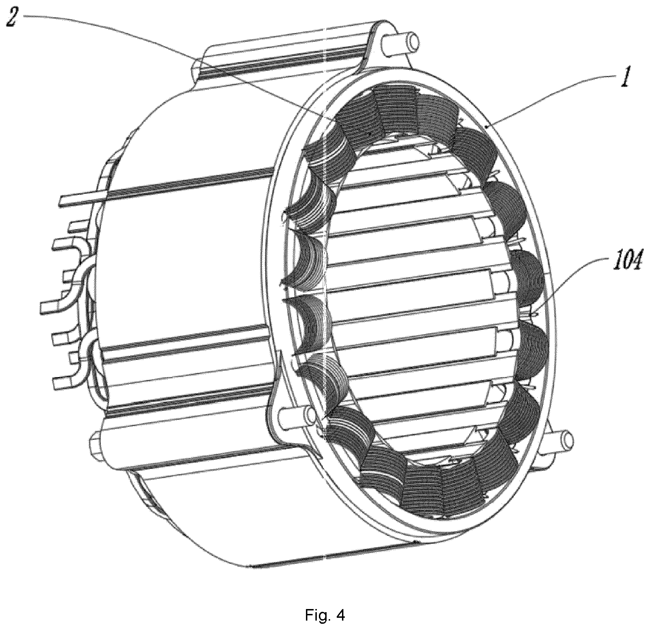

A concentrated winding axial cooling motor stator, as shown in Figs.3 to 6, is arranged on a casing. The casing may be a hybrid box body, a single motor casing, or other box bodies, which can be set in accordance with actual requirements.

The concentrated winding axial cooling motor stator includes a stator core 4 and stator windings 2, the stator windings 2 are arranged on the stator core 4 to form electromagnetic circuits and generate rotating magnetic fields, and the stator windings 2 use a concentrated wiring mode.

The concentrated winding axial cooling motor stator further includes an axial oil feeding device 1 and barriers, wherein,
the barriers are arranged on the stator core 4, are in contact with the stator windings 2, fix the stator windings 2 and plug notches of the stator core 4. Each barrier and stator winding coils at two sides in slots of the stator core 4 constitute a cooling medium communication cavity for flowing of the cooling medium that flows out of the axial oil feeding device 1 and facilitating the cooling medium to be sprayed on the axial inner surface of the stator winding coils. The cooling medium communication cavity is a space formed by the barrier and slot portions of the stator winding coils at two lateral walls of the slots of the stator core for facilitating flowing of the cooling medium.

The barrier is a slot wedge 3, a frame 8 or insulating paper. When the barrier is a slot wedge 3, the slot wedge 3 is arranged at a notch of the stator core 4, is in contact with the stator winding 2, and fixes the stator winding 2 to prevent the stator winding 2 from departing from the slot of the stator core 4. When the barrier is a frame 8, the frame 8 is arranged at teeth of the stator core 4, sleeves on the stator core 4, is in contact with the stator winding 2, and fixes the stator winding 2 to prevent the stator winding 2 from departing from the slot of the stator core 4. When the barrier is insulating paper, the insulating paper is arranged on an inner wall of the slot of the stator core 4, blocks off the notch of the slot of the stator core 4, and is in contact with the stator winding 2 to prevent the stator winding 2 from departing from the slot of the stator core 4. The barrier may be in other structures, which can be selected in accordance with actual requirements and thus is not particularly limited hereby.

The axial oil feeding device 1 is arranged at any end part of the stator core 4 or is connected with a casing, and a location of the axial oil feeding device 1 corresponds to any end of the stator core 4. One side of the axial oil feeding device 1 close to the stator winding 2 is provided with a spray hole 102. The spray hole 102 corresponds to a cooling medium communication cavity. The barrier blocks off a cooling medium flowing out of the spray hole 102 and guides a flow line of the cooling medium, so that the cooling medium flows along the axial inner surface of the stator winding 2 towards two ends of the stator winding 2. The cooling medium flowing out of the axial oil feeding device 1 flows in the cooling medium communication cavity, is sprayed on the barrier and/or coils of the stator winding 2, the cooling medium sprayed on the coils of the stator winding 2 flows along the axial inner surface of the coils of the stator winding, while the cooling medium sprayed on the barrier is blocked off by the barrier and changed in the flow line direction. As can be seen, the cooling medium is divided into two portions both of which flow along the axial inner surface of the coils of the stator winding respectively, one portion of the cooling medium flows towards one end of the stator winding 2, and the other portion of the cooling medium flows towards the other end of the stator winding 2, so that the cooling medium flows through the whole axial inner surface of the stator winding 2, and the cooling medium is in full contact with the whole coils of the stator winding, thereby increasing a heat exchange contact area, and improving heat dissipation capability.

In some embodiments, the axial oil feeding device 1 is arranged at any end part of the stator core 4, as shown in Figs.3 to 5, i.e., the axial oil feeding device 1 is connected with the stator core 4 and arranged on a leading-out terminal 6 of the stator winding 2, or the axial oil feeding device 1 is connected with the stator core 4 and arranged on a non-leading-out terminal 7 of the stator winding 2. The axial oil feeding device 1 is mounted in a yoke space of the stator core 4, and the yoke space at each of two sides of the stator core 4 can be provided with the axial oil feeding device 1 respectively, so that the yoke space of the stator core 4 can be fully used, a cross section of an oil passage is increased, and occupied space of a casing is reduced. The axial oil feeding device 1 is fixedly connected with the stator core 4, therefore, the space utilization rate of the casing is improved, and complexity in design of the casing is reduced. When the axial oil feeding device 1 is mounted on any end part of the stator core 4, an oil pipe body 100 of the axial oil feeding device 1 is provided with a connecting portion 103 where a mounting hole is formed, the axial oil feeding device 1 is fixedly mounted in the yoke space of any end part of the stator core 4 by a set bolt 5, and the motor stator is fixedly mounted in the casing by another set bolt 5.

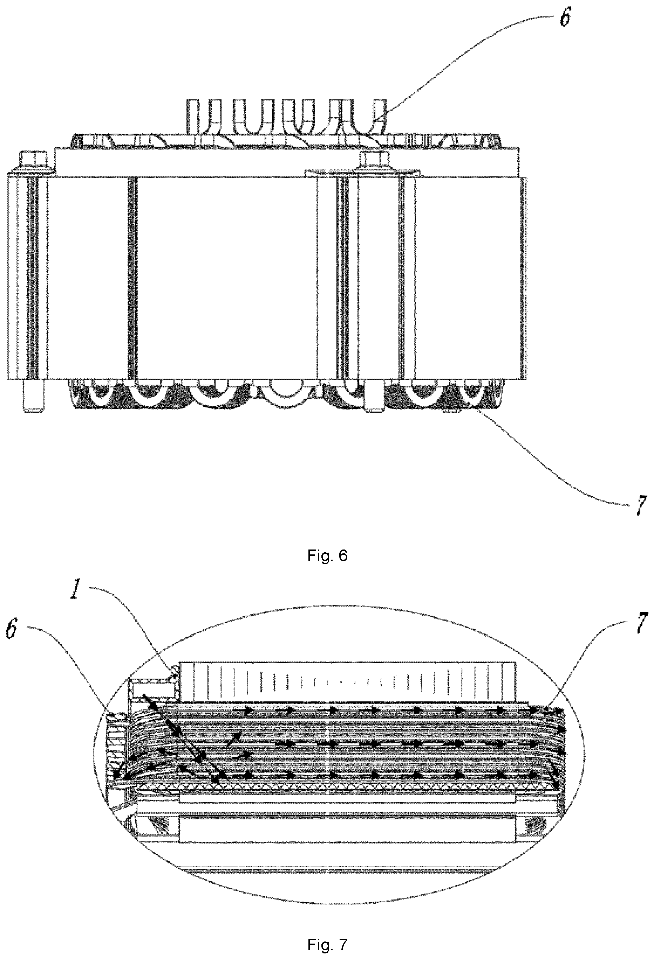

As shown in Fig.7, the axial oil feeding device 1 is fixedly mounted on the leading-out terminal of the stator core 4; the axial oil feeding device 1 encircles a circumferential side of the leading-out terminal of the stator winding 2; and an axis of the spray hole 102 is slantly arranged and intersected with an axis of the stator winding 2.

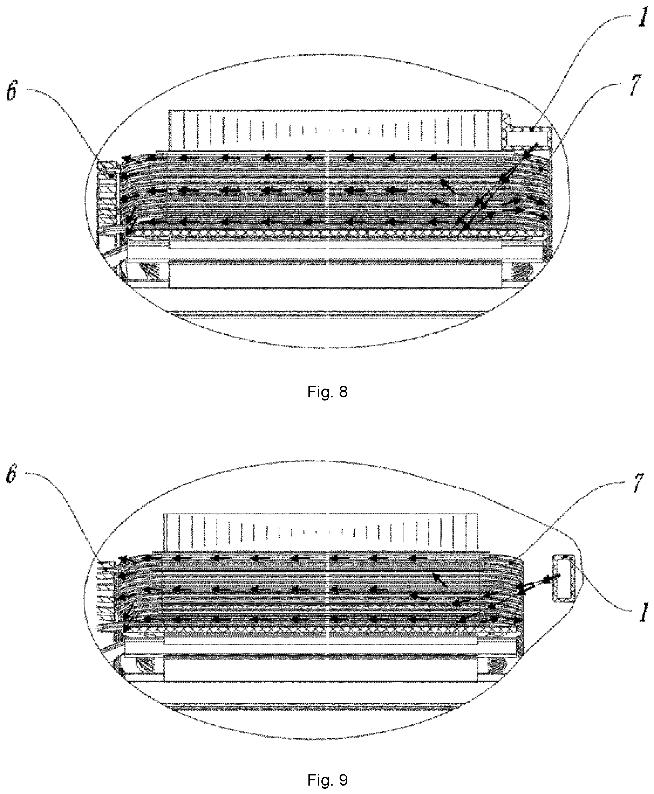

As shown in Fig.8, the axial oil feeding device 1 is fixedly mounted on the non-leading-out terminal of the stator core 4; the axial oil feeding device 1 encircles the circumferential side of the non-leading-out terminal of the stator winding 2; and an axis of the spray hole 102 is slantly arranged and intersected with an axis of the stator winding 2.

In the above-mentioned two structures, a cooling medium is slantly sprayed from the spray hole 102 and sputtered on the barrier and/or coils of the stator winding 2. The cooling medium sprayed on the coils of the stator winding 2 flows along an axial inner surface of the coils of the stator winding, and for the cooling medium sprayed on the barrier, the barrier blocks off the cooling medium sprayed from the spray hole 102, changes a flow direction of the cooling medium, and guides a flow line of the cooling medium. As can be seen, the cooling medium is divided into two portions both of which are sprayed on the coils of the stator winding 2, so that the cooling medium flows along an axial inner surface of the coils of the stator winding 2, one portion of the cooling medium flows towards one end of the stator winding 2, and the other portion of the cooling medium flows towards the other end of the stator winding 2 and flows out from the two ends of the stator winding 2, therefore, a heat exchange contact area between the cooling medium and the stator winding 2 is increased, and heat dissipation efficiency is improved.

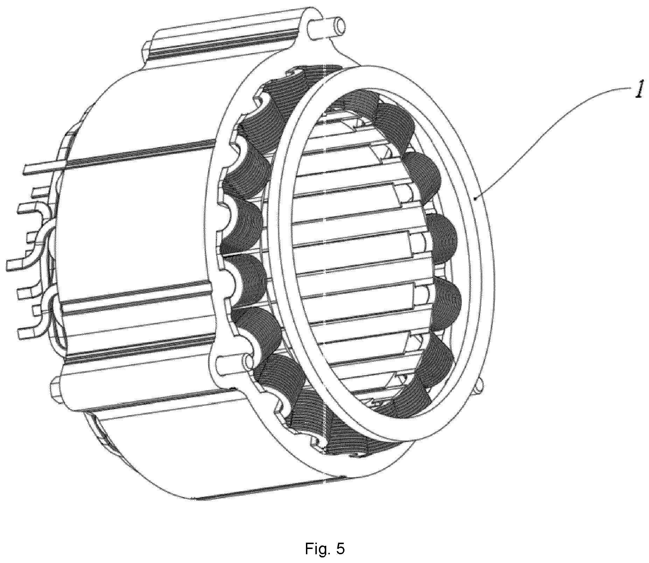

Or, in some embodiments, as shown in Fig.5, the axial oil feeding device 1 is connected with the casing, and a location of the axial oil feeding device 1 corresponds to any end of the stator core 4, i.e., the axial oil feeding device 1 is fixedly mounted on the casing, or the axial oil feeding device 1 is integrated with the casing. Therefore, when the motor stator is mounted in the casing, the location of the axial oil feeding device 1 corresponds to that of a leading-out terminal 6 or a non-leading-out-terminal 7 of the motor stator, the axial oil feeding device 1 encircles the circumferential side of the stator winding 2, is in contact with a surface of an end part of the end of the stator winding 2, or the axial oil feeding device 1 has a distance away from the surface of the end part of the end of the stator winding 2, which can be set in accordance with the actual requirements. Spraying of the cooling medium to coils of the stator winding 2 is carried out by the axial oil feeding device 1. The axial oil feeding device 1 may be connected with the casing by a set bolt 5 or other connectors, or the axial oil feeding device 1 is integrally molded in the casing, the motor stator when mounted in the casing is matched with the axial oil feeding device 1, so that the axial oil feeding device 1 encircles the circumferential side of the stator winding 2 and sprays the cooling medium on the leading-out terminal 6 or the non-leading-out-terminal 7 of the stator winding 2 to cool the stator winding 2.

As shown in Fig.9, the axial oil feeding device 1 is fixedly connected with the casing and corresponds to the non-leading-out terminal of the stator core 4. The axial oil feeding device 1 has a distance away from the non-leading-out terminal of the stator winding 2. One side of the axial oil feeding device 1 provided with the spray holes 102 and an end face of the non-leading-out terminal of the stator winding 2 are substantially parallel to each other. The axis of the spray hole 102 and the end surface of the non-leading-out terminal of the stator winding 2 are intersected obliquely.

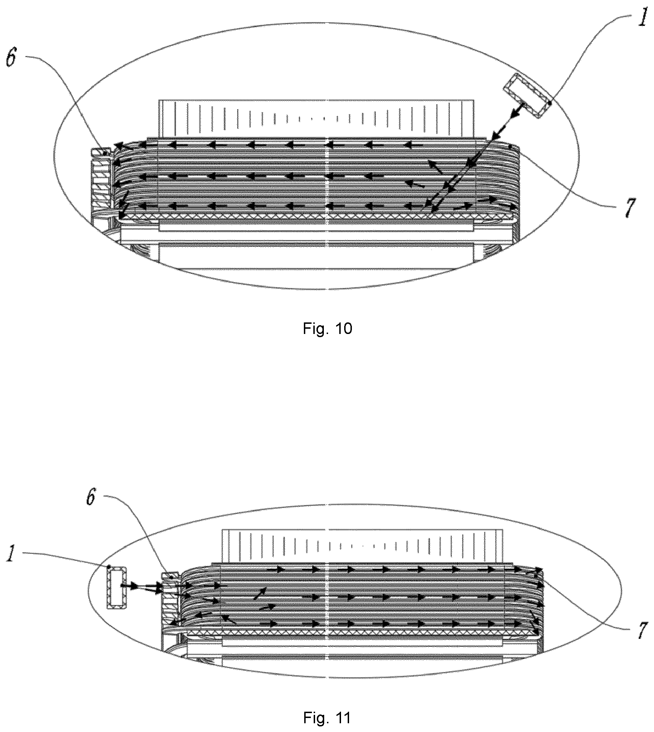

As shown in Fig.10, the axial oil feeding device 1 is fixedly connected with the casing and corresponds to the non-leading-out terminal of the stator core 4. The axial oil feeding device 1 has a distance away from the non-leading-out terminal of the stator winding 2. One side of the axial oil feeding device 1 provided with the spray holes 102 corresponds to a side face of the non-leading-out terminal of the stator winding 2. The axis of the spray hole 102 and the side face of the non-leading-out terminal of the stator winding 2 are intersected obliquely.

As shown in Fig.11, the axial oil feeding device 1 is fixedly connected with the casing and corresponds to the leading-out terminal of the stator core 4. The axial oil feeding device 1 has a distance away from the leading-out terminal of the stator winding 2. One side of the axial oil feeding device 1 provided with the spray holes 102 and an end face of the leading-out terminal of the stator winding 2 are substantially parallel to each other. The axis of the spray hole 102 and the end surface of the leading-out terminal of the stator winding 2 are intersected obliquely.

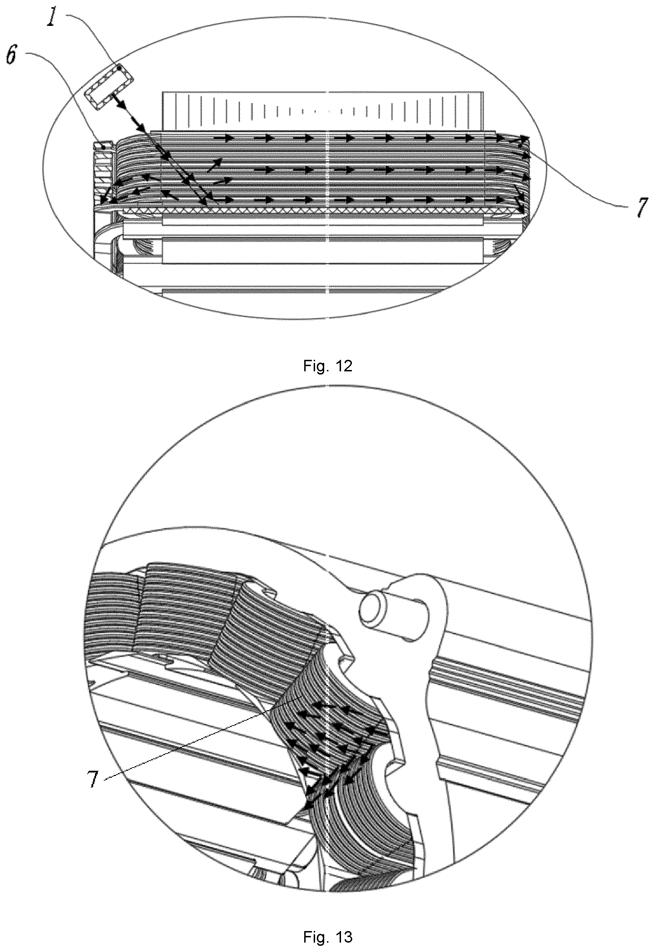

As shown in Fig.12, the axial oil feeding device 1 is fixedly connected with the casing and corresponds to the leading-out terminal of the stator core 4. The axial oil feeding device 1 has a distance away from the leading-out terminal of the stator winding 2. One side, provided with the spray holes 102, of the axial oil feeding device 1 corresponds to a side face of the leading-out terminal of the stator winding 2. The axis of the spray hole 102 and the side of the stator winding 2 are intersected obliquely.

In the above four structures, a cooling medium is slantly sprayed from the spray hole 102 and sputtered on the barrier and/or coils of the stator winding 2. The cooling medium sprayed on the coils of the stator winding 2 flows along an axial inner surface of the coils of the stator winding, and for the cooling medium sprayed on the barrier, the barrier blocks off the cooling medium sprayed from the spray hole 102, changes a flow direction of the cooling medium, and guides a flow line of the cooling medium. As can be seen, the cooling medium is divided into two portions both of which are sprayed on the coils of the stator winding 2, so that the cooling medium flows along an axial inner surface of the coils of the each stator winding 2, one portion of the cooling medium flows towards one end of the stator winding 2, and the other portion of the cooling medium flows towards the other end of the stator winding 2 and flows out from the two ends of the stator winding 2, therefore, a heat exchange contact area between the cooling medium and the stator winding 2 is increased, and heat dissipation efficiency is improved.

No matter how the axial oil feeding device 1 is mounted, the axial oil feeding device 1 is located on the leading-out terminal 6 or non-leading-out terminal 7 of the motor stator and sprays a cooling medium on the axial inner surface of the coils of the stator winding 2 at this end, and the cooling medium flows along the axial inner surface of the coils of the stator winding 2 towards two ends of the coils of the stator winding 2 and flows out from the two ends, therefore, a heat exchange contact area between the cooling medium and the stator winding 2 is increased, and heat dissipation efficiency is improved. The cooling medium flows along the axial inner surface of the coils of the stator winding 2 towards two ends of the coils of the stator winding 2 and flows out from the two ends, in such a case, the cooling medium flows through the whole axial inner surface of the coils of the stator winding 2, resolving the problem that the middle part of the coils of the stator winding 2 is quick to temperature rise and a temperature difference between two end parts is large, and promoting power density.

The barrier is connected with the stator core 4 and arranged in a notch of a slot of the stator core 4. The barrier is in contact with the stator winding 2, fixes the stator winding 2 and blocks the notch of the slot of the stator core 4 so as to prevent the coils of the stator winding 2 from departing from the slot of the stator core 4. The spray hole 102 of the axial oil feeding device 1 corresponds to the slot of the stator core 4, and the spray hole 102 of the axial oil feeding device 1 corresponds to the cooling medium communication cavity in the slot of the stator core 4, so that after the cooling medium flows out of the spray hole 102, the cooling medium flows in the cooling medium communication cavity and is sprayed on the barrier, and the barrier blocks off the cooling medium sprayed from the spray hole 102, changes a flow direction of the cooling medium and guides a flow line of the cooling medium. As can be seen, the cooling medium is divided into two portions both of which are sprayed on the coils of the stator winding 2, so that the cooling medium flows along the axial inner surface of the coils of the stator winding 2, one portion of the cooling medium flows towards one end of the stator winding 2, and the other portion of the cooling medium flows towards the other end of the stator winding 2 and flows out from the two ends of the stator winding 2, therefore, a heat exchange contact area between the cooling medium and the stator winding 2 is increased, and heat dissipation efficiency is improved.

The above axial oil feeding device 1, as shown in Fig.1, is used for flowing of the cooling medium, so that the cooling medium enters the inside of the concentrated winding axial cooling motor stator by the axial oil feeding device 1, is sprayed to the axial inner surface of the coils of the stator winding 2 under the effect of the barrier and flows along the axial inner surface of the coils towards two ends of the stator winding 2.

The axial oil feeding device 1 includes an oil pipe body 100, the oil pipe body 100 is internally provided with a cavity for facilitating flowing of the cooling medium, the cooling medium flows in the cavity inside the oil pipe body 100, flows to the location of each coil of the stator winding 2 and thus cools each coil of the stator winding 2.

The axial oil feeding device 1 further includes an oil inlet 101, and the oil inlet 101 is connected with the oil pipe body 100 and communicated with the cavity inside the oil pipe body 100, so that the cooling medium is able to conveniently enter the inside of the oil pipe body 100. The cooling medium enters in the cavity inside the oil pipe body 100 and flows in the cavity inside the oil pipe body 100.

The axial oil feeding device 1 further includes spray holes 102. The spray holes 102 are formed on one side of the axial oil feeding device 1 close to the stator winding 2, i.e., the spray holes 102 are formed on one side of the oil pipe body 100 close to surfaces of the coils of the stator winding 2, and the spray holes 102 are communicated with the cavity inside the oil pipe body 100 to facilitate flowing out of the cooling medium. A plurality of spray holes 102 are provided, so that the cooling medium is sprayed to all coils of the stator winding 2 from different locations and different directions for cooling. An axis of the spray hole 102 and an axis of the stator winding 2 are intersected obliquely, so that an outflow line of the cooling medium is in a slant state and extends from the spray hole 102 towards one end of the axis of the stator winding 2, the cooling medium is sprayed to the barrier and/or the coils of the stator winding 2 and thus flows along an axial inner surface of the stator winding 2 towards two ends of the stator winding 2. The axis of the stator winding 2 and the axis of the oil pipe body 100 are coaxial, i.e., the axis of the spray hole 102 and the axis of the oil pipe body 100 are intersected obliquely, so that an outflow line of the cooling medium is in a slant state and extends from the spray hole 102 towards one end of the axis of the oil pipe body 100, the cooling medium flowing out of the spray hole 102 is obliquely sprayed from the oil pipe body 100 and sprayed on the barrier and/or the coils of the stator winding 2, the cooling medium sprayed on the coils of the stator winding 2 flows along the axial inner surface of the coils of the stator winding, and the cooling medium sprayed on the barrier is changed in the flow direction and divided into two portions both of which are sprayed to the axial inner surface of the coils of the stator winding 2, the cooling medium flows along the inner surface of the coils of the stator winding 2, one portion of the cooling medium flows towards one end of the stator winding 2, and the other portion of the cooling medium flows towards the other end of the stator winding 2, so that the cooling medium flows through the whole axial inner surface of the stator winding 2 and cools the coils of the stator winding 2.

The axis of the spray hole 102 slants from the spray hole 102 towards one end of the stator winding 2 away from the axial oil feeding device 1, the axis of the spray hole 102 is slant, as the axial oil feeding device 1 is located on one end of the stator winding 2, in order that the cooling medium is sprayed on the barrier and then sprayed on the coils of the stator winding 2 through changing a flow direction of the cooling medium by the barrier, the axis of the spray hole 102 slants from the spray hole 102 towards one end of the stator winding 2, and the end of the stator winding 2 is one end away from the axial oil feeding device 1, for example, if the axial oil feeding device 1 is arranged on the leading-out terminal 6 of the stator winding 2, the axis of the spray hole 102 obliquely extends from the spray hole 102 towards the non-leading-out-terminal 7 of the stator winding 2.

A plurality of spray holes 102 are provided, each cooling medium communication cavity corresponds to a location of at least one of the spray holes 102, so that the cooling medium flowing out of the spray holes 102 is sprayed on the barriers, i.e., the slot of each stator core 4 is provided with a cooling medium communication cavity, each cooling medium communication cavity corresponds to at least one of the spray holes 102, i.e., each cooling medium communication cavity corresponds to one spray hole 102, or each cooling medium communication cavity corresponds to two or more spray holes 102, which can be set in accordance with actual requirements.

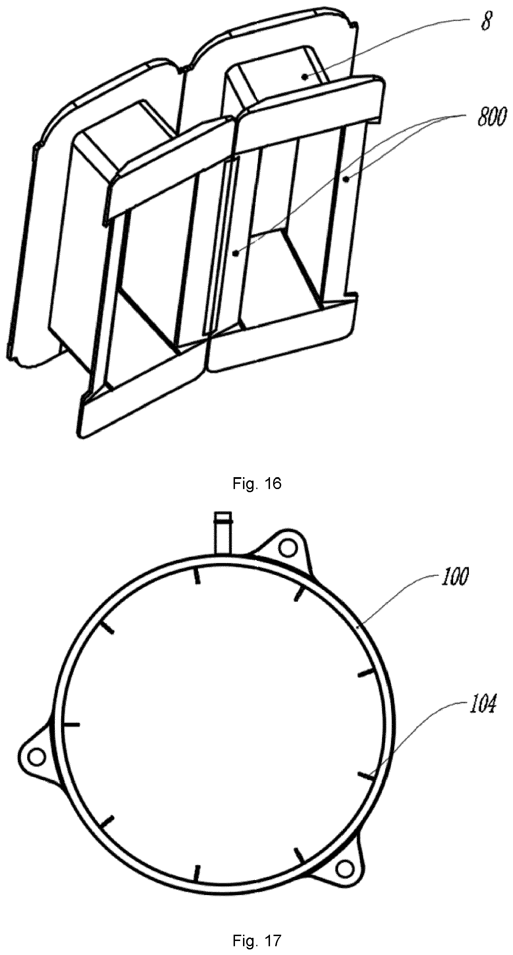

Or, in some embodiments, as shown in Fig.17, the plurality of spray holes 102 are configured in such a way that adjacent spray holes 102 are spaced apart by one cooling medium communication cavity, the plurality of spray holes 102 and the plurality of cooling medium communication cavities are arranged at intervals, the adjacent spray holes 102 are spaced apart by one cooling medium communication cavity, i.e., a quantity of the spray holes 102 is half of that of the cooling medium communication cavities. When one spray hole 102 corresponds to one cooling medium communication cavity, two cooling medium communication cavities at two sides of the cooling medium communication cavity do not correspond to spray holes 102, and there is a cooling medium communication cavity between adjacent spray holes 102, the cooling medium communication cavity does not correspond to any spray hole 102, so that one side of each coil is sprayed by the cooling medium to cool the coils.

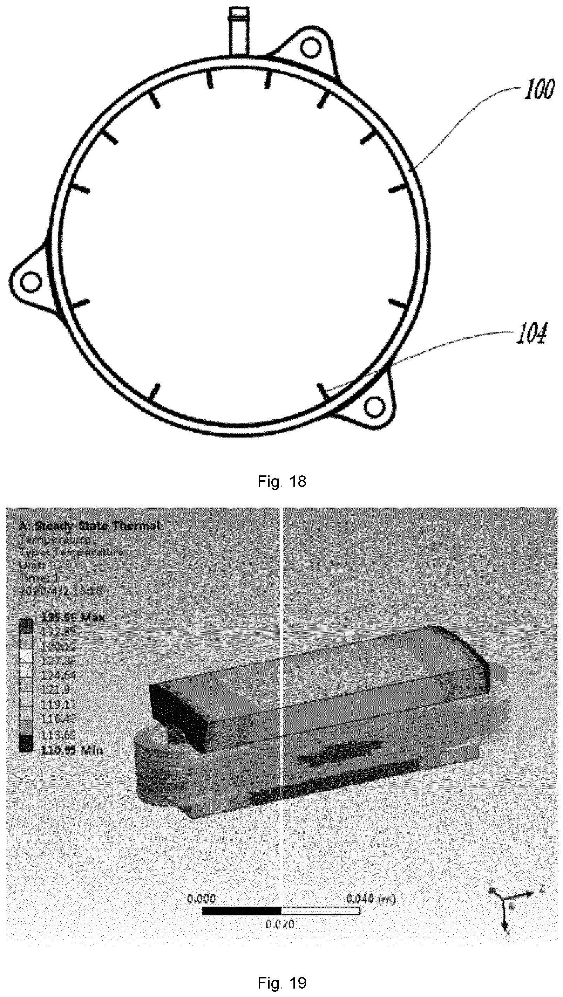

Or, in some embodiments, as shown in Fig.18, the plurality of spray holes 102 are configured in such a way that a portion of the spray holes 102 correspond to a portion of the cooling medium communication cavities, and adjacent spray holes 102 of the other portion of the spray holes 102 are spaced apart by one cooling medium communication cavity, so that the portion of the spray holes 102 correspond to the portion of the cooling medium communication cavities, and the other portion of the spray holes 102 and the other portion of the cooling medium communication cavities are spaced apart, i.e., the portion of the spray holes 102 are in one-to-one correspondence with the portion of the cooling medium communication cavities, each spray hole 102 corresponds to one cooling medium communication cavity; a quantity of the other portion of the spray holes 102 is less than half of the quantity of the other portion of the cooling medium communication cavities, so that in the corresponding relationship of this portion of spray holes 102 and the cooling medium communication cavities, when one spray hole 102 corresponds to one cooling medium communication cavity, two cooling medium communication cavities at two sides of the cooling medium communication cavity do not correspond to the spray holes 102, and there is a cooling medium communication cavity that does not correspond to any spray hole 102 between adjacent spray holes 102, so that one sides of two coils in this portion of the cooling medium communication cavities are sprayed by the cooling medium for cooling.

Arrangement of the spray holes 102 can be selected in accordance with actual oil mass of an oil line and is not particularly limited hereby.

To cool each coil of the stator winding 2, the cooling medium can be sprayed to each coil of the stator winding 2. In this embodiment, each cooling medium communication cavity corresponds to one spray hole 102, each spray hole 102 corresponds to a slot of a stator core 4, a distance between adjacent spray holes 102 is consistent with a distance between two adjacent slots of the stator core 4, so that the spray hole 102 corresponds to the cooling medium communication cavity. The plurality of spray holes 102 are uniformly spaced apart, i.e., the spray holes 102 are formed on one side face of the oil pipe body 100 facing the stator windings 2, so that the cooling medium after sprayed from the oil pipe body 100 is directly sprayed to the coils of the stator windings 102, a quantity of the spray holes 102 is consistent with that of the stator cores 4, the location of each spray hole 102 corresponds to the slot of each stator core 4, so that the cooling medium flowing out of the spray hole 102 is sprayed to the coils of the stator winding 2, and each spray hole 102 corresponds to one slot of the stator core 4. When the stator winding 2 is a concentrated winding, the slot of each stator core 4 is internally provided with slot portions of two groups of coils, there is a gap between the slot portions of the two coils, the slot portions of the two coils and the barriers constitute cooling medium communication cavities, the spray holes 102 correspond to the cooling medium communication cavities, when the cooling medium is sprayed from the spray holes 102, it flows along the cooling medium communication cavities, and due to a flow pressure of the cooling medium, the cooling medium is sprayed from the spray holes 102 for a certain distance to be directly sprayed on the barriers. Meantime, the axis of the spray hole 102 and the axis of the oil pipe body 100 are intersected obliquely, different angles of inclination correspond to different cooling medium spraying angles of the spray holes 102, so as to adjust amounts of the cooling medium flowing to two end parts of the stator winding 2, in such a case, the cooling medium sprayed from the spray holes 102 is sprayed obliquely to the inner side face of the stator winding 2, the cooling medium outflow line 104 has a certain angle of inclination, so the cooling medium is able to be sprayed on each barrier in the slot of a same stator core 4, the barrier changes a flow line direction of the cooling medium sprayed from each spray hole 102, the cooling medium is divided into two portions, so that the two portions of the cooling medium are able to be sprayed on the coils of the stator winding 2, the cooling medium flows along the axial inner surface of the coils of the stator winding 2, one portion of the cooling medium flows towards one end of the stator winding, and the other portion of the cooling medium flows towards the other end of the stator winding 2, therefore, the cooling medium flows through the coils of the whole stator winding 2, thereby increasing a heat exchange contact area, and cooling the stator winding 2.

The spray hole 102 may be in the shape of a circle, a square, a triangle, a polygon or other shapes which can be selected in accordance with actual requirements and is not particularly limited hereby.

The cooling medium enters in the cavity inside the oil pipe body 100 by the oil inlet 101, flows in the cavity inside the oil pipe body 100, and flows out from the spray holes 102. As the axis of the spray hole 102 and the axis of the oil pipe body 100 are intersected obliquely, the cooling medium flowing out of the spray holes 102 is sprayed obliquely, and extended lines of a plurality of sprayed cooling medium are intersected on a same straight line, therefore a cone-shaped cooling medium spraying net is constructed by taking the axis of the oil pipe body 100 as an axis, spraying of the cooling medium to the coils of the stator winding 2 is realized from different positions and different angles, the cooling medium is sprayed on the axial inner surface of the coils of the stator winding 2, flows along the axial inner surface of the coils of the stator winding 2 towards two ends of the stator winding 2 and flows out from the two ends. As the cooling medium flows through the whole axial inner surface of the stator winding 2, a heat exchange contact area between the cooling medium and the stator winding 2 is increased, and the coils of the stator winding are cooled.

As shown in Fig.1, the above oil pipe body 100 has a cavity inside for facilitating flowing of the cooling medium. To cool all stator coils, the oil pipe body 100 encircles the circumferential side of the stator winding 2, and encircles the stator winding 2 therein, so that after the cooling medium is sprayed out from the oil pipe body 100, and its flow direction is changed by the barrier, the cooling medium is sprayed to the axial inner surface of each coil of the stator winding 2, flows along the inner surface of the coils of the stator winding and flows out from the two ends of the coils, therefore, a heat exchange contact area between the cooling medium and the stator winding 2 is increased, the cooling medium takes away heat produced by the stator coils as much as possible, cooling of the stator is realized, and the problem that the middle part of the coils of the stator winding coil is quick to temperature rise and a temperature difference between two end parts is large is avoided.

To realize that the oil pipe body 100 encircles the stator winding 2, the oil pipe body 100 is of an annular structure, as shown in Fig.1, the oil pipe body 100 is arranged outside the stator winding 2 in an encircled manner and is coaxial with the stator winding 2. A side of the oil pipe body 100 facing the stator winding 2 is provided with a plurality of spray holes 102, and an axis slant direction and angle of inclination of the spray holes 102 are set in accordance with the mounting location of the oil pipe body 100. A cross section of the oil pipe body 100 is in the shape of a circle or a polygon, i.e., the cross section of the oil pipe body 100 is of a circle, an oval, a square, a trapezoid or other shapes, which can be selected in accordance with actual requirements and is not particularly limited hereby. When the oil pipe body 100 is of an annular structure, at least one oil inlet 101 is provided for supplying the cooling medium for the oil pipe body 100. The oil inlet 101 can be formed at the other side of the oil pipe body 100 away from the spray holes 102, or a side vertical to the side of the oil pipe body 100 provided with the spray holes 102, or is formed by other modes, which can be set in accordance with actual requirements and is not particularly limited hereby.

Or, in some other embodiments, as shown in Fig.2, a plurality of oil pipe bodies 100 are provided and are annularly arranged by taking the axis of the stator winding 2 as a center. The plurality of oil pipe bodies 100 constitute an annular structure and arranged in an encircled manner along an axial direction of the stator winding 2. One side of each oil pipe body 100 facing the stator winding 2 is provided with a plurality of spray holes 102, each oil pipe body 100 is provided with at least one oil inlet 101, so that in each oil pipe body 101, a cooling medium flows, the spray holes 102 of each oil pipe body 100 spray a cooling medium to cool the coils of the stator winding 2 from different positions and different angles. The cross section of any oil pipe body 100 is in the shape of a circle or a polygon, i.e., the cross section of any oil pipe body 100 is of a circle, an oval, a square, a trapezoid or other shapes, which can be selected in accordance with actual requirements and is not particularly limited hereby. For example, two oil pipe bodies 100 are provided along the circumferential direction of the stator winding 2 and encircles the circumferential side of the stator winding 2, one side of each oil pipe body 100 facing the stator winding 2 is provided with a plurality of spray holes 102 for spraying a cooling medium to the coils of the stator winding 2, oil inlets 101 of the two oil pipe bodies 100 are relatively close to each other, so that the oil inlets 101 of the two oil pipe bodies 100 are connected with a same oil pipe outside for input of the cooling medium.

In some embodiments, the cross section of the oil pipe body 100 is of a square, in such a case, locations and angles of the spray holes 102 (cooling medium outlet line 104) are easy to adjust, and the spray holes 102 are convenient to operate in processing.

The cross section of the cavity inside the oil pipe body 100 is same as or different from that of the oil pipe body 100, which can be set in accordance with actual requirements and is not particularly limited hereby.

In some embodiments, the above barrier has a flow guide portion 300. The flow guide portion 300 is opposite to the spray hole 102. The cooling medium slantly sprayed from the spray hole 102 flows in the cooling medium communication cavity and sputtered on the flow guide portion 300 of the barrier, the flow guide portion 300 blocks off the cooling medium, changes a direction of the cooling medium outflow line 104 (as shown in Figs.7 to 13), and guides the cooling medium sputtered on the flow guide portion 300, so that the flow direction of the cooling medium is changed to being substantially parallel to the axis of the stator winding 2 from being intersected obliquely with the axial direction of the stator winding 2, the cooling medium is divided into two portions, the two portions of the cooling medium flow along the axial inner surface of the coils of the stator winding 2, one portion of the cooling medium flows towards one end of the stator winding 2, and the other portion of the cooling medium flows towards the other end of the stator winding 2, wherein the cooling medium flowing away from the end with the axial oil feeding device 1 is high in flowability, so that the cooling medium flows through the whole axial inner surface of the coils of the stator winding; meanwhile, the flow guide portion 300 of the barrier guides amounts of the cooling medium at two end parts of the stator winding 2, so that the cooling medium flows towards two end parts of a plurality of coils in the slots of a same stator core 4 and flows out from the two ends.

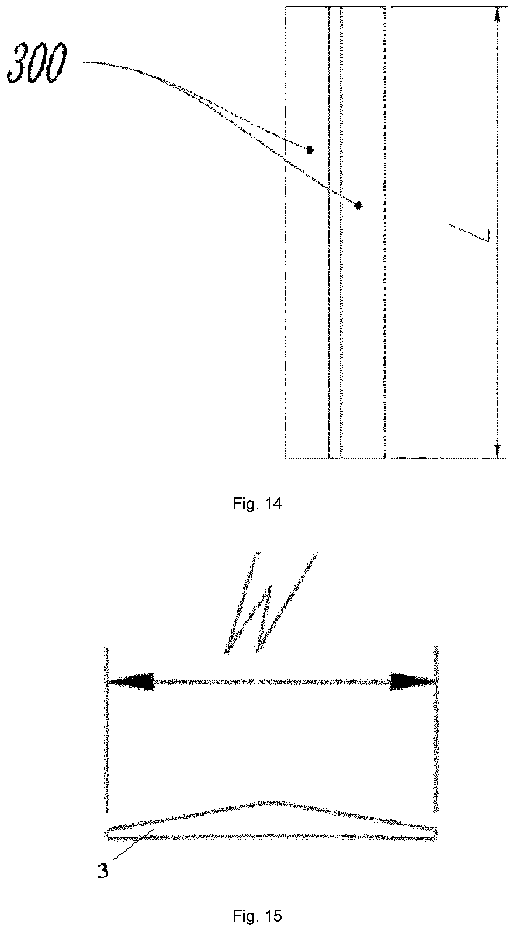

As shown in Fig. 14 and Fig.15, in some embodiments, when the barrier is a slot wedge 3, the slot wedge 3 has a slot wedge body of a platy structure, two flow guide portions 300 are arranged on one side of the slot wedge body and symmetrically arranged on a same side of the slot wedge body. The planes where the flow guide portion 300 is located are intersected with the side of the slot wedge body. The planes where the two flow guide portions 300 are located are also intersected, so that the two flow guide portions 300 are arranged on a side of the slot wedge body in a raised manner, the joint of the two flow guide portions 300 is in plane transition, so that the two flow guide portion 300 and the slot wedge body constitute a structure with a trapezoid cross section, i.e., the cross section of the slot wedge 3 is of a trapezoid, the flow guide portions 300 and the spray holes 102 are opposite to each other, so that the cooling medium sputtered on the flow guide portions 300 flows towards two directions, and the flow direction of the cooling medium is changed to being substantially parallel to the axis of the stator winding 2 from being slantly intersected with the axial direction of the stator winding 2, the cooling medium is shunted at the end part of the stator winding 2 close to the axial oil feeding device 1 and is divided into two portions, the two portions of the cooling medium flow along the axial inner surface of the coils of the stator winding 2, one portion of the cooling medium flows towards one end of the stator winding, and the other portion of the cooling medium flows towards the other end of the stator winding, the cooling medium flows through all coils of the stator winding 2 and cools all the coils of the stator winding 2.

In some embodiments, the height L of the slot wedge 3 is adaptive to that of the stator winding 2, i.e., the height L of the slot wedge 3 is larger than that of teeth of the stator core 4. If the height of the slot wedge 3 is much closer to the heights of ends parts of two sides of the stator winding 2, more cooling media is sputtered on the slot wedge 3, larger amount of the cooling medium is able to be guided to the end parts of the two sides of the stator winding 2, and a corresponding heat contact area is larger. The height L of the slot wedge 3 can be selected in accordance with actual requirements and is not particularly limited hereby.

In some other embodiments, the width W of the slot wedge 3 is adaptive to that of the stator core 4. If the width W of the slot wedge 3 is much closer to the widths of slots of the stator core 4, more cooling media is gathered on the end part of the stator winding 2 and a dispersive area of the cooling medium is larger. The width W of the slot wedge 3 can be selected in accordance with actual requirements and is not particularly limited hereby.

As shown in Fig.16, in other embodiments, when the barrier is a frame 8, the frame 8 sleeves on teeth of the stator core 4, frame flow guide portions 800 of adjacent frames 8 blocks off notches of the slots of the stator core 4, so that the stator winding 2 is prevented from departing from the slots of the stator core 4. Meanwhile, the cooling medium sputtered on the frame flow guide portions 800 of the frames flows towards two directions, the flow direction of the cooling medium is changed to being substantially parallel to the axis of the stator winding 2 from being slantly intersected with the axial direction of the stator winding 2, and the cooling medium is shunted at the end part of the stator winding 2 close to the axial oil feeding device 1 and is divided into two portions, the two portions of the cooling medium flow along the axial inner surface of the coils of the stator winding 2, one portion of the cooling medium flows towards one end of the stator winding 2, and the other portion of the cooling medium flows towards the other end of the stator winding 2, the cooling medium flows through all coils of the stator winding 2 and cools all the coils of the stator winding 2.

A concentrated winding motor includes a concentrated winding axial cooling motor stator mentioned above.

The above concentrated winding motor will be explained below in the form of examples.

In some embodiments, the cross section of the oil pipe body 100 is of a square annular structure, i.e., the oil pipe body 100 is in an annular pipe structure, its cross section is square-shaped, and the cross section of an inside cavity is circular. The oil pipe body 100 is fixedly mounted in a yoke space at one end of the stator core 4, and arranged on a leading-out terminal 6 of the stator winding 2, one side of the oil pipe body 100 facing the stator winding 2 is provided with a plurality of spray holes, each spray hole 102 corresponds to one slot of the stator core 4, an axis of the spray hole 102 and the axis of the stator winding 2 are slantly intersected, i.e., the cooling medium sprayed out of the spray hole 102 is slantly sprayed to a non-leading-out terminal 7 of the stator winding 2. Under the effect of the pressure of the cooling medium, after sprayed from the spray hole 102, the cooling medium flows in a cooling medium communication cavity to arrive at a slot wedge 3 and to contact with a flow guide portion 300 of the slot wedge 3. As the flow guide portion 300 is arranged in the form of a bevel, and two flow guide portions 300 are provided, the cooling medium is shunted to change a direction of the cooling medium outflow line 104, one portion of the cooling medium flows towards the leading-out terminal 6 of the stator winding 2, the other portion of the cooling medium flows towards the non-leading-out terminal 7 of the stator winding 2, and each portion of the cooling medium flows along an axial inner surface of the coils and flows out from the two ends of the stator winding 2, thereby increasing a heat exchange contact area between the cooling medium and the stator winding 2, improving heat dissipation capability, solving the problem that the middle part of the coils of the concentrated winding is quick to temperature rise and a temperature difference between two end parts is large, and increasing power density; meanwhile, the axial oil feeding device 1 is arranged on a yoke of the stator core 4, thereby making full use of the yoke space of the motor stator, and improving space utilization rate of a casing. In some embodiments, the cooling medium is gearbox lubricating oil that enters an axial oil line structure after flowing out of a gearbox to cool the motor stator, therefore, the gearbox body is simple in oil line design, small in required space and convenient to realize.

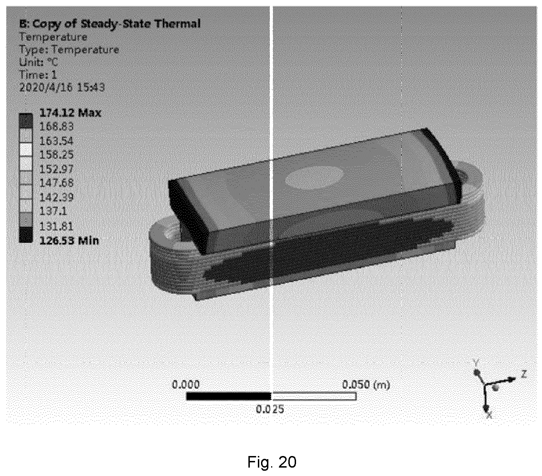

Upon comparison on simulation results of a cooling mode of axial gap spraying of a cooling medium and an existing cooling mode of radially spraying end parts of a stator and a middle part of a core, as shown in Fig.19 and Fig.20, with same amount and oil temperature of cooling oil and same work conditions of a motor in the two simulation solutions, the results show that the highest temperature of a stator is up to 174°C (at the middle part of the stator) and the highest temperature of a winding at an end part of the stator is 166°C in the solution of radially spraying end parts of a stator and a middle part of a core, while they are respectively 136°C (at the middle part of the stator) and 130°C in the solution of axial gap spraying.

As can be seen, axial spraying brings out a good cooling effect.

By adopting the above technical solution, the concentrated winding axial cooling motor stator is simple in structure and convenient to use. The axial oil feeding device has an oil pipe body with a cavity in its interior, one side of the oil pipe body facing the stator winding is provided with a plurality of spray holes, the oil pipe body encircles the circumferential side of the stator winding, and the oil pipe body is mounted in a yoke space at any end of the motor stator, the yoke of the stator is fully used, and the yoke and the stator are secured on the casing, so space utilization rate is improved; or the axial oil feeding device is mounted on the casing, or the axial oil feeding device is integrated on the casing, the axial oil feeding device corresponds to the yoke of the stator when the motor stator is mounted, the space inside the casing is fully used, and space utilization rate of the casing is improved. The axial oil feeding device is located on the leading-out terminal or non-leading-out terminal of the motor stator, spraying of the cooling medium is carried out on one end of the motor stator, and an axis of the spray hole of an axial cooling structure and the axis of the stator winding are intersected obliquely, so that the cooling medium in the cooling medium outflow line is slantly sprayed towards the other end of the motor stator, blocked off by the barrier in the slot of the stator core after passing through the coils of the stator winding, and shunted by the flow guide portion of the barrier to change its flow direction, therefore, the cooling medium is directly sprayed on the axial inner surface of the coils of the concentrated winding stator, flows along the axial inner surface of the coils towards two ends of the stator winding, and flows out from the two ends, increasing a heat exchange contact area between the cooling medium and the winding, improving heat dissipation capability, solving the problem that the middle part of the concentrated winding coil is quick to temperature rise and a temperature difference between two end parts is large, and increasing power density. With different angles of inclination of axes of the spray holes, amounts of the cooling medium flowing to two end parts are different, by adjusting oil outlet angles, amounts of the cooling medium axially flowing to two end parts is adjusted, so that the axial oil feeding device can cool different types of stator windings, and thus has a wide application range; with gearbox lubricating oil as a cooling medium, the lubricating oil flows out of a gearbox into the axial oil feeding device to cool the motor stator, therefore, a gearbox body is simple in oil line design, small in required space, and easy to realize.

The above gives detailed explanations about the embodiments of the present invention, which merely serves as the preferred embodiments o the present invention and is not regarded as making any limitation to the scope of the present invention. The scope of the invention is defined by the appended claims.

## Claims

1. A concentrated winding axial cooling motor stator suitable to be arranged on a casing the stator comprising a stator core (4) and stator windings (2) arranged on the stator core (4), further comprising barriers and an axial oil feeding device (1), wherein,
the barriers are arranged on the stator core (4), are in contact with the stator windings (2) and plug notches of the stator core (4);
the axial oil feeding device (1) is arranged on any end part of the stator cores (4) or is connected with the casing, and a location of the axial oil feeding device (1) corresponds to any end of the stator cores (4); and
a side of the axial oil feeding device (1) close to the stator windings (2) is provided with a spray hole (102), an axis of the spray hole (102) and an axis of each stator winding (2) are slantly intersected, so that an outflow line of a cooling medium is in a slant state and extends from the spray hole (102) towards an end of the axis of each stator winding (2), and the cooling medium is sprayed to the barrier and/or the stator winding (2) and thus flows along an axial inner surface of the stator winding (2) towards two ends of the stator winding (2);
wherein each barrier and coils of two adjacent groups of the stator windings (2) in slots of the stator core (4) constitute a cooling medium communication cavity, the spray hole (102) corresponds to the cooling medium communication cavity, the barrier blocks off a cooling medium flowing out of the spray hole (102) and guides a flow line of the cooling medium, so that the cooling medium flows along the axial inner surface of the stator winding (2) in the two adjacent groups of the stator windings towards two ends of the stator winding (2).

2. The concentrated winding axial cooling motor stator according to claim 1, wherein an axis of the spray hole (102) extends slantly from the spray hole (102) towards an end that away from an end, provided with the axial oil feeding device (1), of the stator winding (2).

3. The concentrated winding axial cooling motor stator according to claim 1 or 2, wherein a plurality of spray holes (102) are provided, and each cooling medium communication cavity corresponds to a location of at least one of the spray holes (102);
or, the plurality of spray holes (102) are configured in such a way that adjacent spray holes (102) are spaced apart by one cooling medium communication cavity;
or, the plurality of spray holes (102) are configured in such a way that a portion of the spray holes (102) correspond to a portion of the cooling medium communication cavities, and adjacent spray holes (102) of the other portion of the spray holes (102) are spaced apart by one cooling medium communication cavity so that each coil of each stator winding (2) is sprayed by the cooling medium.

4. The concentrated winding axial cooling motor stator according to claim 1 or 2, wherein the axial oil feeding device (1) further comprises:
an oil pipe body (100) having a cavity provided therein, and the spray hole (102) being communicated with the cavity inside the oil pipe body (100) for facilitating flowing of the cooling medium;
an oil inlet (101) connected with the oil pipe body (100) and communicated with the cavity inside the oil pipe body (100), so that the cooling medium is able to conveniently enter the inside of the oil pipe body (100).

5. The concentrated winding axial cooling motor stator according to claim 4, wherein a cross section of the oil pipe body (100) is in a shape of a circle or a polygon.

6. The concentrated winding axial cooling motor stator according to claim 5, wherein the oil pipe body (100) is of an annular structure, or a plurality of oil pipe bodies (100) are provided, and the plurality of oil pipe bodies (100) are annularly arranged by taking the axis of the stator winding (2) as a center.

7. The concentrated winding axial cooling motor stator according to claim 1 or 2, wherein the barrier has a flow guide portion (300), and the flow guide portion (300) is opposite to the spray hole (102) for changing a flow direction of the cooling medium.

8. The concentrated winding axial cooling motor stator according to 7, wherein the barrier is a slot wedge (3), a frame (8) or insulating paper.

9. A concentrated winding motor, comprising the concentrated winding axial cooling motor stator according to any one of claims 1 to 8.

## Patentansprüche

1. Axialkühlmotorstator mit konzentrierter Wicklung, der dazu geeignet ist, auf einem Gehäuse des Stators angeordnet zu sein, umfassend einen Statorkern (4) und Statorwicklungen (2), die auf dem Statorkern (4) angeordnet sind, ferner umfassend Barrieren und eine axiale Ölzuführvorrichtung (1), wobei
die Barrieren auf dem Statorkern (4) angeordnet sind, in Kontakt mit den Statorwicklungen (2) und Steckkerben des Statorkerns (4) sind;
die axiale Ölzuführvorrichtung (1) an einem beliebigen Endteil der Statorkerne (4) angeordnet ist oder mit dem Gehäuse verbunden ist und eine Stelle der axialen Ölzuführvorrichtung (1) einem beliebigen Ende der Statorkerne (4) entspricht; und
eine Seite der axialen Ölzuführvorrichtung (1) nahe den Statorwicklungen (2) mit einem Sprühloch (102) bereitgestellt ist, eine Achse des Sprühlochs (102) und eine Achse jeder Statorwicklung (2) schräg geschnitten sind, sodass eine Ausflussleitung eines Kühlmediums in einem schrägen Zustand ist und sich von dem Sprühloch (102) zu einem Ende der Achse jeder Statorwicklung (2) erstreckt, und das Kühlmedium zu der Barriere und/oder der Statorwicklung (2) gesprüht wird und somit entlang einer axialen Innenfläche der Statorwicklung (2) zu zwei Enden der Statorwicklung (2) fließt;
wobei jede Barriere und Spulen von zwei benachbarten Gruppen der Statorwicklungen (2) in Schlitzen des Statorkerns (4) einen Kühlmediumkommunikationshohlraum bilden, wobei das Sprühloch (102) dem Kühlmediumkommunikationshohlraum entspricht, wobei die Barriere ein Kühlmedium, das aus dem Sprühloch (102) fließt, abblockt und eine Flusslinie des Kühlmediums führt, sodass das Kühlmedium entlang der axialen Innenfläche der Statorwicklung (2) in den zwei benachbarten Gruppen der Statorwicklungen zu zwei Enden der Statorwicklung (2) fließt.

2. Axialkühlmotorstator mit konzentrierter Wicklung nach Anspruch 1, wobei sich eine Achse des Sprühlochs (102) schräg von dem Sprühloch (102) zu einem Ende das weg von einem Ende erstreckt, das mit der axialen Ölzuführvorrichtung (1) der Statorwicklung (2) bereitgestellt ist.

3. Axialkühlmotorstator mit konzentrierter Wicklung nach Anspruch 1 oder 2, wobei eine Vielzahl von Sprühlöchern (102) bereitgestellt ist und jeder Kühlmediumkommunikationshohlraum einer Stelle von zumindest einem der Sprühlöcher (102) entspricht;
oder die Vielzahl von Sprühlöchern (102) auf eine solche Weise konfiguriert ist, dass benachbarte Sprühlöcher (102) durch einen Kühlmediumkommunikationshohlraum beabstandet sind;
oder die Vielzahl von Sprühlöchern (102) auf eine solche Weise konfiguriert ist, dass ein Abschnitt der Sprühlöcher (102) einem Abschnitt der Kühlmediumkommunikationshohlräume entspricht, und benachbarte Sprühlöcher (102) des anderen Abschnittes der Sprühlöcher (102) durch einen Kühlmediumkommunikationshohlraum beabstandet sind, sodass jede Spule jeder Statorwicklung (2) durch das Kühlmedium besprüht wird.

4. Axialkühlmotorstator mit konzentrierter Wicklung nach Anspruch 1 oder 2, wobei die axiale Ölzuführvorrichtung (1) ferner Folgendes umfasst:
einen Ölrohrkörper (100) mit einem darin bereitgestellten Hohlraum, und wobei das Sprühloch (102) mit dem Hohlraum innerhalb des Ölrohrkörpers (100) kommuniziert, um Fließen des Kühlmediums zu erleichtern;
einen Öleinlass (101), der mit dem Ölrohrkörper (100) verbunden ist und mit dem Hohlraum innerhalb des Ölrohrkörpers (100) kommuniziert, sodass das Kühlmedium bequem in das Innere des Ölrohrkörpers (100) eintreten kann.

5. Axialkühlmotorstator mit konzentrierter Wicklung nach Anspruch 4, wobei ein Querschnitt des Ölrohrkörpers (100) in einer Form eines Kreises oder eines Polygons ist.

6. Axialkühlmotorstator mit konzentrierter Wicklung nach Anspruch 5, wobei der Ölrohrkörper (100) von einer ringförmigen Struktur ist oder eine Vielzahl von Ölrohrkörpern (100) bereitgestellt ist und die Vielzahl von Ölrohrkörpern (100) ringförmig angeordnet ist, indem die Achse der Statorwicklung (2) als Mitte genommen wird.

7. Axialkühlmotorstator mit konzentrierter Wicklung nach Anspruch 1 oder 2, wobei die Barriere einen Flussführungsabschnitt (300) aufweist und der Flussführungsabschnitt (300) gegenüber dem Sprühloch (102) zum Ändern einer Flussrichtung des Kühlmediums ist.

8. Axialkühlmotorstator mit konzentrierter Wicklung nach Anspruch 7, wobei die Barriere ein Nutkeil (3), ein Rahmen (8) oder Isolierpapier ist.

9. Motor mit konzentrierter Wicklung, umfassend den Axialkühlmotorstator mit konzentrierter Wicklung nach einem der Ansprüche 1 bis 8.

## Revendications

1. Stator de moteur à refroidissement axial à enroulement concentré adapté pour être agencé sur un carter du stator
comprenant un noyau (4) de stator et des enroulements (2) de stator agencés sur le noyau (4) de stator, comprenant en outre des barrières et un dispositif d'alimentation en huile axiale (1),
lesdites barrières étant agencées sur le noyau (4) de stator, étant en contact avec les enroulements (2) de stator et raccordant les encoches du noyau (4) de stator ;
ledit dispositif d'alimentation en huile axiale (1) étant agencé sur une partie d'extrémité quelconque des noyaux de stator (4) ou étant raccordé au carter, et un emplacement du dispositif d'alimentation en huile axiale (1) correspondant à une extrémité quelconque des noyaux (4) de stator ; et
un côté du dispositif d'alimentation en huile axiale (1) proche des enroulements (2) de stator étant pourvu d'un trou de pulvérisation (102), un axe du trou de pulvérisation (102) et un axe de chaque enroulement de stator (2) étant croisés de manière inclinée, afin qu'une ligne d'écoulement d'un milieu de refroidissement soit dans un état incliné et s'étende à partir du trou de pulvérisation (102) vers une extrémité de l'axe de chaque enroulement (2) de stator, et ledit milieu de refroidissement étant pulvérisé sur la barrière et/ou l'enroulement de stator (2) et s'écoulant ainsi le long d'une surface interne axiale de l'enroulement (2) de stator vers deux extrémités de l'enroulement (2) de stator ;
chaque barrière et des bobines de deux groupes adjacents d'enroulements (2) de stator dans des fentes du noyau (4) de stator constituant une cavité de communication de milieu de refroidissement, le trou de pulvérisation (102) correspondant à la cavité de communication de milieu de refroidissement, ladite barrière bloquant un milieu de refroidissement s'écoulant hors du trou de pulvérisation (102) et guidant une ligne d'écoulement du milieu de refroidissement, afin que le milieu de refroidissement s'écoule le long de la surface interne axiale de l'enroulement (2) de stator dans les deux groupes adjacents des enroulements de stator vers deux extrémités de l'enroulement (2) de stator.

2. Stator de moteur à refroidissement axial à enroulement concentré selon la revendication 1, un axe du trou de pulvérisation (102) s'étendant de manière inclinée à partir du trou de pulvérisation (102) vers une extrémité qui s'éloigne d'une extrémité, pourvue du dispositif d'alimentation en huile axiale (1), de l'enroulement (2) de stator.

3. Stator de moteur à refroidissement axial à enroulement concentré selon la revendication 1 ou 2, une pluralité de trous de pulvérisation (102) étant prévus, et chaque cavité de communication de milieu de refroidissement correspondant à un emplacement d'au moins l'un des trous de pulvérisation (102) ;
ou, la pluralité de trous de pulvérisation (102) étant conçus d'une façon telle que des trous de pulvérisation adjacents (102) sont espacés les uns des autres par une cavité de communication de milieu de refroidissement ;
ou, la pluralité de trous de pulvérisation (102) étant conçus d'une façon telle qu'une partie des trous de pulvérisation (102) correspond à une partie des cavités de communication de milieu de refroidissement, et des trous de pulvérisation adjacents (102) de l'autre partie des trous de pulvérisation (102) étant espacés par une cavité de communication de milieu de refroidissement afin que chaque bobine de chaque enroulement (2) de stator soit aspergée du milieu de refroidissement.

4. Stator de moteur à refroidissement axial à enroulement concentré selon la revendication 1 ou 2, ledit dispositif d'alimentation en huile axiale (1) comprenant en outre :
un corps de tuyau d'huile (100) comportant une cavité prévue dans celui-ci, et le trou de pulvérisation (102) communiquant avec la cavité à l'intérieur du corps de tuyau d'huile (100) pour faciliter l'écoulement du milieu de refroidissement ;
une entrée d'huile (101) raccordée au corps de tuyau d'huile (100) et communiquant avec la cavité à l'intérieur du corps de tuyau d'huile (100), afin que le milieu de refroidissement puisse facilement entrer à l'intérieur du corps de tuyau d'huile (100).

5. Stator de moteur à refroidissement axial à enroulement concentré selon la revendication 4, une section transversale du corps de tuyau d'huile (100) possédant la forme d'un cercle ou d'un polygone.

6. Stator de moteur à refroidissement axial à enroulement concentré selon la revendication 5, ledit corps de tuyau d'huile (100) possédant une structure annulaire, ou une pluralité de corps de tuyau d'huile (100) étant prévus, et ladite pluralité de corps de tuyau d'huile (100) étant agencés de manière annulaire en prenant l'axe de l'enroulement (2) de stator comme centre.

7. Stator de moteur à refroidissement axial à enroulement concentré selon la revendication 1 ou 2, ladite barrière possédant une partie de guidage d'écoulement (300), et ladite partie de guidage d'écoulement (300) étant opposée au trou de pulvérisation (102) pour changer une direction d'écoulement du milieu de refroidissement.

8. Stator de moteur à refroidissement axial à enroulement concentré selon la revendication 7, ladite barrière étant une cale de fente (3), un cadre (8) ou du papier isolant.

9. Moteur à enroulement concentré, comprenant le stator de moteur à refroidissement axial à enroulement concentré selon l'une quelconque des revendications 1 à 8.
